**Europäisches Patentamt**

**European Patent Office**

**Office européen des brevets**

(11) Publication number: **0 088 416**
**B1**

(12) **EUROPEAN PATENT SPECIFICATION**

(45) Date of publication of patent specification: **10.12.86**

(51) Int. Cl.⁴: **C 08 L 27/06**

(21) Application number: **83102195.1**

(22) Date of filing: **05.03.83**

(54) Infrared reflecting vinyl polymer compositions.

(30) Priority: **08.03.82 US 355501**

(43) Date of publication of application:
**14.09.83 Bulletin 83/37**

(45) Publication of the grant of the patent:
**10.12.86 Bulletin 86/50**

(84) Designated Contracting States:
**BE DE FR GB IT NL SE**

(56) References cited:
**BE-A- 679 526**
**FR-A-2 267 343**

**CHEMICAL ABSTRACTS, vol. 74, no. 16, 19th April 1971, page 35, no. 77152m, Columbus, Ohio, USA**

(73) Proprietor: **The B.F. GOODRICH Company Dept. 0015 WHB-6 500 South Main Street Akron, Ohio 44318 (US)**

(72) Inventor: **Rabinovitch, Elvira Borisovna 3798 Colony Road South Clid Ohio 44118 (US)**
Inventor: **Summers, James William 29751 Wolf Road Bay Village Ohio 44140 (US)**

(74) Representative: **von Kreisler, Alek, Dipl.-Chem. et al Deichmannhaus am Hauptbahnhof D-5000 Köln 1 (DE)**

Courier Press, Leamington Spa, England.

## Description

### Background of the invention

Polymeric materials, such as vinyl polymers, and products made therefrom, must exhibit resistance to degradation if they are to have any useful commercial value, particularly for outdoor use, such as in house siding, and the like. The degradation referred to can be a partial or total loss of structural integrity, a darkening or discoloration of the product, a loss of flexibility or resilience, loss of shape due to softening, or a combination of any of these phenomena. The various types of degradation, above referred to, are promoted or catalyzed by oxygen (air), heat, and light, particularly sunlight in the ultraviolet (UV), visible, and infrared (IR) ranges.

In order to protect polymeric materials, it has been the practice heretofore to add various ingredients or stabilizers to the polymers, or compounds thereof, to prevent or inhibit degradation of finished articles made therefrom. These stabilizers work in diverse and complex ways, such that a compound that stabilizes against heat and oxygen degradation in a polymer or resin may not stabilize the same against light degradation, or vice versa. In many instances, to obtain optimum protection, a mixture of compounds, each specifically selected to afford maximum protection against a certain type of degradation, is often used.

It is well known that light energy from the sun causes a temperature rise in articles exposed to the sun. This is a particularly bad problem in the case of vinyl house siding since it causes "oil canning" of the siding which is a surface distortion. Oil canning is caused by the fact that the center of the siding panel is longer than the butt and hanger and the longer center causes a wave in the panel. If the butt and hanger portions have shrunk, then the oil canning will be permanent. For example, the center of the panel, which is in the sun, will be hotter and therefore due to thermal expansion longer than the butt and hanger, which are shaded. To minimize the thermal expansion problem, colors must be chosen which do not absorb too much of the sun's energy and the materials chosen must not have too high a coefficient of linear expansion.

Vinyl, and many other plastic materials, require ultraviolet absorbers for protection during weathering. These absorbers may be organic materials, titanium dioxide, carbon black, etc. However, by absorbing the ultraviolet light, the articles are heated by the ultraviolet and not much can be done to change this heating. Also, pigments which absorb or reflect in the visible light region are sometimes added to give color. However, these pigments absorb the visible light and heat the article by this absorbed light. To change the amount of light absorbed in the visible light region would change the color and, accordingly, nothing can be done to change the visible heat absorbed.

It would be particularly desirable to have pigments, or other materials, which would reflect infrared energy and which would lower the heating of the article without changing the ultraviolet protection or the color thereof. It would be desirable to have a pigment, such as a black pigment, which reflects infrared light. Carbon black pigment has been proposed but, since it absorbs light in the ultraviolet, and infrared regions, it is particularly bad for causing heating of articles.

In the "Encyclopedia of Polymer Science and Technology", (1971), Volume 10, page 165, it is stated that black iron oxides exhibit excellent light-fastness, good weathering resistance and fair to good heat resistance. Also, that brown iron oxides exhibit excellent light-fastness and good resistance to heat. However, there is no indication therein that the iron oxides are infrared reflecting, which is most desirable in vinyl compounds to reduce the heat buildup, and particularly in vinyl house siding which is exposed to the sun.

### Summary of the invention

It has been found that, by the proper choice of pigments, which reflect infrared energy, the heating of the article, such as vinyl house siding, can be lowered without changing the ultraviolet protection or the color of the article. It has been further found that a black infrared reflecting pigment, such as a mixture of $Cr_2O_3$ and $Fe_2O_3$, which is weatherable, and other infrared reflecting pigments, when employed in vinyl polymer compounds, substantially reduce the heat buildup in articles made therefrom when exposed to the sun. It is important to have a black pigment which reflects infrared light since carbon black is particularly bad for causing heating of articles.

### Detailed description

The polymeric compositions of the present invention are comprised of a main vinyl polymer material and an infrared reflecting pigment. Also, the compositions may contain a plasticizer for the vinyl polymer. Thus, the vinyl polymer particles should be porous to allow for good penetration of the plasticizer therethrough.

Vinyl polymer, or vinyl polymer material, as used herein, refers to homopolymers and copolymers of vinyl halides and vinylidene halides, such as vinyl chloride, vinyl bromide, vinylidene chloride, etc. The vinyl halides and vinylidene halides may be copolymerized with each other or each with one or more polymerizable olefinic monomers having at least one terminal $CH_2=C<$ grouping. As examples of such olefinic monomers there may be mentioned the $\alpha,\beta$-olefinically unsaturated carboxylic acids, such as acrylic acid, methacrylic acid, ethacrylic acid, $\alpha$-cyanoacrylic acid, and the like; esters of acrylic acid, such as methyl acrylate, ethyl acrylate, butyl acrylate, octyl acrylate, cyanoethyl acrylate, and the like; esters of methacrylic acid, such as methyl methacrylate, butyl methacrylate, and the like; nitriles, such as acrylonitrile, methacrylonitrile, and the like; acrylamides, such as methyl acrylamide, N-methylol acrylamide, N-butoxy methacrylamide, and the like; vinyl ethers, such as ethyl vinyl ether, chloroethyl vinyl ether, and the like; the vinyl ketones; styrene and styrene derivatives, such as α-methyl styrene, vinyl toluene, chlorostyrene, and the like; vinyl naphthalene, allyl and vinyl chloroacetate, vinyl acetate, vinyl pyridine, methyl vinyl ketone; the diolefins, including butadiene, isoprene, chloroprene, and the like; and other polymerizable olefinic monomers of the types known to those skilled in the art.

The present invention is particularly applicable to homopolymers and copolymers made by the polymerization of vinyl chloride or vinylidene chloride alone or in admixture with one or more polymerizable olefinic monomers copolymerizable therewith in amounts up to about 40% by weight, based on the weight of the monomer mixture. The most preferred vinyl polymer, or resin, is polyvinyl chloride (PVC) and the invention, for simplicity and convenience, will be described in connection therewith, it being understood that this is merely intended in an illustrative sense and not limitative.

The vinyl polymer compositions of the present invention are useful in making any type article which will be exposed to sunlight, and particularly for prolonged period of time. However, the vinyl polymer compositions are particularly useful in making vinyl house siding wherein weatherability is important and likewise, the reduction of heat buildup in the siding in order to prevent or substantially reduce surface distortion or oilcanning of the siding. The siding may be all one piece, or it may be an extruded composite of a substrate and a capstock thereover. When a composite is employed, the capstock will contain the infrared reflecting pigment.

Irrespective of the article to be made, the proper vinyl chloride polymer should be employed. It is preferred, in most instances, to use PVC and particularly, in making house siding. In any event, the vinyl chloride polymer particles must have good porosity in order to efficiently absorb plasticizer. Solid nonporous polymers must be more highly swollen and require too high a concentration of plasticizer to produce acceptable products or articles. It has been found that vinyl chloride polymer particles containing from 15% to 50% by volume of pore space are satisfactory in making products suitable for use outdoors in the sunlight. Preferably, the polymer particles will contain from about 25% to about 35% by volume of pore space.

The amount of plasticizer can be from 0 parts to 30 parts by weight, based on the weight of the polymer. The amount of plasticizer that is usually employed to give satisfactory results is in the range of 10 parts to 40 parts by weight based on the weight of 100 parts of vinyl chloride polymer. Preferably, however, the amount of plasticizer employed will be in the range of 20 parts to 30 parts by weight, based on the weight of 100 parts of polymer. The amount of plasticizer employed in the present invention is well below the amounts usually employed in making plasticized vinyl polymers and, particularly, in making PVC plastisols for use in making films, etc., where flexibility is important. When amounts of plasticizer greater than 40 parts by weight per 100 parts by weight of vinyl chloride polymer are used, there is an adverse effect on the article or product resulting in lowering the impact retention thereof upon weathering.

As examples of suitable plasticizers for use in the present invention are the phthalic acid and isophthalic acid diesters of benzyl or phenyl radicals, or alkyl, alkoxyalkyl or cycloalkyl radicals containing from 1 to 24 carbon atoms, and preferably 4 to 16 carbon atoms, such as, for example, diisooctyl isophthalate, butyl benzyl phthalate, diphenyl phthalate, dimethyl phthalate, diisobutyl phthalate, diisoamyl phthalate, diisohexyl phthalate, di-n-hexyl phthalate, di-(2-ethyl hexyl) phthalate, diisooctyl phthalate, di-n-octyl phthalate, diisodecyl phthalate, di-n-decyl phthalate, butyl nonyl phthalate, butyl decyl phthalate, isooctyl isodecyl phthalate, n-octyl n-decyl phthalate, di(butoxyethyl) phthalate, dicyclohexyl phthalate, and the like. In addition, there are other plasticizers useful in the present invention, such as, for example, diisobutyl adipate, diisooctyl adipate, di-(2 ethyl hexyl) adipate, diisodecyl adipate, isooctyl isodecyl adipate, epoxidized soybean oil, di-(2-ethyl hexyl) agelate, diisooctyl agelate, dibenzyl sebacate, dimethyl sebacate, dibutyl sebacate, di-(2-ethyl hexyl) sebacate, diisooctyl sebacate, and the like. Also suitable as plasticizers are the ricinoleates, such as, for example, diethylene glycol monorisinoleate, methyl recinoleate, and the like. Further, triorganophosphates may also be used, such as triphenyl phosphate, cresyl diphenyl phosphate, tributyl phosphate, and the like. The preferred plasticizers for use in the present invention are the liquid phthalate plasticizers, among which di-(2-ethyl hexyl) phthalate or diisodecyl phthalate are particularly good in producing the desired results. A mixture of plasticizers may also be employed, that is, two or more of the above type plasticizers, depending upon the particular vinyl chloride being used and the porosity thereof.

Of course, the most important ingredients in the compositions of the present invention are the infrared reflecting pigments and, in particular, black infrared reflecting pigments. The most important infrared reflecting black pigment is O-1316 Black made by the Ferro Corporation of Cleveland, Ohio, which is a mixture of $Cr_2O_3$ and $Fe_2O_3$. By the use of such pigments, the heating of vinyl polymer articles, such as vinyl house siding, is lowered without changing the ultraviolet protection or the color thereof.

In order to get variation in colors of the vinyl polymer articles, other infrared reflecting pigments are employed in combination with the black pigment. As examples of other infrared reflecting pigments there may be named phthalocyanine blue, meteor light brown #7739 (Mn-Zn-Al-Cr oxides), chromium oxide green, bright golden yellow (Ti-Sb-Cr oxides), chromathal brown 5R, phthalocyanine green, cobalt blue #1, titanium dioxide, etc. The black pigment should be used in the vinyl polymer compositions in the range of

3

0,64 part to 15 parts by weight, based on the weight of the vinyl polymer or polymers in the composition. The other infrared reflecting pigments will be varied in amounts, depending upon the desired color wanted in the finished article. However, it should again be pointed out that the use of carbon black pigment is to be avoided, since it absorbs light in the ultraviolet, visible and infrared and is particularly bad for causing heat buildup in vinyl polymer articles. This is very vividly shown in the specific examples that follow hereinafter.

To further illustrate the present invention, the following specific examples are given, it being understood that this is merely intended in an illustrative and not a limitative sense. In the examples, all parts and percents are by weight unless otherwise indicated.

Example I

In this example, a series of 12 capstock runs and 2 rigid, unplasticized PVC runs were made. Capstock is the outer weatherable layer in coextended vinyl house siding and vinyl windows, etc. In the runs, carbon black was used as the control and compared to an infrared reflecting black pigment obtained from the Ferro Corporation of Cleveland, Ohio and referred to as "O-1316 Black". The ingredients of each of the runs were mixed on a 2-roll mill for 3 minutes at 171°C (340°F). Each composition was preheated for 5 minutes at a temperature of 171°C (340°F) to 177°C (350°F) and then put in a press and formed into panels 15.2 cm (6 in)×15.2 cm (6 in)×1,1 cm (0.45 in). They were pressed for 5 minutes. The heat buildup in each case was measured by the procedure referred to in the article entitled "Understanding the Cooling and Sizing Requirements of Vinyl House Siding" by J. W. Summers and R. J. Brown, published May, 1979 in Soc. of Plastic Engrs., Technical Papers, Vol. XXV, p. 403. The formulations in each run and the heat buildup results are given in the following table. In the table, the odd-numbered runs, namely 1, 3, 5, 7, 9, 11 and 13, contain carbon black and the even-numbered runs 2, 4, 6, 8, 10, 12 and 14 contain the infrared reflective black pigment in amounts which give the same color match as with carbon black. In the table, all the figures are parts by weight based on 100 weight parts of PVC.

TABLE I

| Run No. | 1 | 2 | 3 | 4 | 5 | 6 |
|---|---|---|---|---|---|---|
| Color | Dark blue | | Dark green | | Beige | |
| Ingredients | | | | | | |
| PVC (polyvinyl chloride) | 100 | 100 | 100 | 100 | 100 | 100 |
| Tin thioglycolate type stabilizer | 3 | 3 | 3 | 3 | 3 | 3 |
| Di-(2-ethyl hexyl) phthalate | 25 | 25 | 25 | 25 | 25 | 25 |
| Lubricants | 1.6 | 1.6 | 1.6 | 1.6 | 1.6 | 1.6 |
| Aluminum silicate, anhydrous | 10 | 10 | 10 | 10 | 10 | 10 |
| Titanium dioxide | 12.5 | 12.5 | 8 | 8 | 15 | 15 |
| Carbon black | 0.02 | — | 0.02 | — | 0.022 | — |
| Ferro black ($Cr_2O_3$-$Fe_2O_3$) | — | 0.64 | — | 0.64 | — | 0.7 |
| Pigments A | 7.2 | 7.2 | — | — | — | — |
| Pigments B | — | — | 9.6 | 9.6 | — | — |
| Pigments C | — | — | — | — | 1.7 | 1.7 |
| Heat buildup in °C | 30° | 26° | 31° | 27° | 27° | 21° |

TABLE I (continued)

| Run No. | 7 | 8 | 9 | 10 | 11 | 12 | 13 | 14 |
|---|---|---|---|---|---|---|---|---|
| Color | | Tan | | Gray | | Brown | | Brown |
| **Ingredients** | | | | | | | | |
| PVC (polyvinyl chloride) | 100 | 100 | 100 | 100 | 100 | 100 | 100 | 100 |
| Tin thioglycolate type stabilizer | 3 | 3 | 3 | 3 | 3 | 3 | 2 | 2 |
| Di-(2-ethyl hexyl) phthalate | 25 | 25 | 25 | 25 | 25 | 25 | — | — |
| Lubricants | 1.6 | 1.6 | 1.6 | 1.6 | 1.6 | 1.6 | 3.75 | 3.75 |
| Aluminum silicate, anhydrous | 10 | 10 | 10 | 10 | 10 | 10 | — | — |
| Titanium dioxide | 5 | 5 | 15 | 15 | 7 | 7 | 7 | 7 |
| Carbon black | 0.08 | — | 0.05 | — | 0.3 | — | .3 | — |
| Ferro black ($Cr_2O_3$-$Fe_2O_3$) | — | 2.56 | — | 1.6 | — | 9 | — | 9 |
| Pigments D | 9 | 9 | — | — | — | — | 1.7 | 1.7 |
| Pigments E | — | — | — | — | 1.7 | 1.7 | 1.5 | 1.5 |
| Processing aid—Acrylic type | — | — | — | — | — | — | — | — |
| Impact modifier—Acrylic | — | — | — | — | — | — | 6 | 6 |
| Heat buildup in °C | 36° | 27° | 32° | 22° | 41° | 28° | 38° | 27° |

As can be seen from the above data, the heat buildup is lowered up to as much as 13°C when employing the infrared reflecting black pigment. This is a considerable improvement over the use of carbon black.

The vinyl polymer compositions of the present invention are most useful in the manufacture of house siding and other building siding, shutters, roof vents, camper tops, and other like materials which are subjected to prolonged exposure to sunlight. Further, the present compositions substantially reduce "oil canning" in vinyl house siding.

While the present invention has been described in terms of its specific embodiments, certain modifications and equivalents will be apparent to those skilled in the art and are intended to be included within the scope of the present invention, which is to be limited only by the scope of the appended claims.

**Claims**

1. A composition adapted for use in the sunlight comprising a homopolymer or copolymer of vinyl monomer(s), with or without a plasticizer for the polymer, a tin stabilizer, color pigments, characterized by 0.64 parts to 15 parts by weight, based on the weight of the polymer, of the infrared reflecting black pigment, O-1316 Black, comprised of a mixture of chromic oxide and ferric oxide.

2. A composition as defined in claim 1 wherein the homopolymer is polyvinyl chloride.

3. A composition as defined in claim 1 or 2 wherein the plasticizer is di-(2-ethyl hexyl) phthalate.

4. A composition as defined in claim 1 wherein the plasticizer level is from 0 parts to 30 parts by weight, based on the weight of the polymer.

5. A composition as defined in claim 1 wherein the monomers are vinyl chloride and ethyl acrylate.

6. A composition as defined in claim 2 wherein the color pigments are chromathal brown 5R and phthalocyanine green.

7. A composition as defined in claim 5 wherein the plasticizer is di-(2-ethyl hexyl) phthalate.

**Patentansprüche**

1. Für den Einsatz im Sonnenlicht hergerichtete Zusammensetzung aus einem Homopolymer oder Copolymer aus einem (mehreren) Vinyl-Monomer(en) mit oder ohne Weichmacher für das Polymer, einem Zinn-Stabilisator, Farbpigmenten, gekennzeichnet durch 0,64 Gew.-Teile bis 15 Gew.-Teile, bezogen auf das Gewicht des Polymers, des infrarotreflektierenden schwarzen Pigments 0-1316 Black aus einer Mischung aus Chrom(III)-oxid und Eisen(III)-oxid.

2. Zusammensetzung nach Anspruch 1, dadurch gekennzeichnet, daß das Homopolymer Polyvinylchlorid ist.

3. Zusammensetzung nach Ansprüchen 1 oder 2, dadurch gekennzeichnet, daß der Weichmacher Di-(2-ethylhexyl)phthalat ist.

4. Zusammensetzung nach Anspruch 1, dadurch gekennzeichnet, daß der Weichmacher-Gehalt 0 bis 30 Gew.-Teile, bezogen auf das Gewicht des Polymers, beträgt.

5. Zusammensetzung nach Anspruch 1, dadurch gekennzeichnet, daß die Monomeren Vinylchlorid und Ethylacrylat sind.

6. Zusammensetzung nach Anspruch 2, dadurch gekennzeichnet, daß die Farbpigmente Chromathal-Braun 5R und Phthalocyanin-Grün sind.

7. Zusammensetzung nach Anspruch 5, dadurch gekennzeichnet, daß der Weichmacher Di-(2-ethylhexyl)phthalat ist.

**Revendications**

1. Une composition adaptée à une utilisation à la lumière du soleil comprenant un homopolymère ou un copolymère de monomère(s) vinylique(s), avec ou sans plastifiant pour le copolymère, un agent stabilisant à base d'étain, des pigments colorés, caractérisée par la présence de 0,64 partie à 15 parties en poids, par rapport au poids du polymère, du pigment réfléchissant à l'infrarouge, Noir 0-1316, composé d'un mélange d'oxyde chromique et d'oxyde ferrique.

2. Une composition telle que définie dans la revendication 1, dans laquelle l'homopolymère est le polychlorure de vinyle.

3. Une composition telle que définie dans l'une des revendications 1 et 2, dans laquelle le plastifiant est le phthalate de di(2-éthyl-hexyle).

4. Une composition telle que définie dans la revendication 1 dans laquelle la teneur en plastifiant est de 0 partie à 30 parties en poids par rapport au poids du polymère.

5. Une composition telle que définie dans la revendication 1, dans laquelle les monomères sont le chlorure de vinyle et l'acrylate d'éthyle.

6. Une composition telle que définie dans la revendication 2, dans laquelle les pigments colorants sont le brun chromathal 5R et le vert de phthalocyanine.

7. Une composition telle que définie dans la revendication 5, dans laquelle le plastifiant est le phthalate de di-(2-éthyl hexyle).